# FASCICULE DE BREVET EUROPEEN

(11) **EP 3 857 425 B1**
(45) Date de publication et mention de la délivrance du brevet: **25.06.2025**
(21) Numéro de dépôt: 19766053.3
(22) Date de dépôt: 16.09.2019
(51) Int. Cl.: G06F 21/73, G06Q 30/018

(54) **PROCÉDÉ DE TRAÇABILITÉ ET D'AUTHENTIFICATION DE PRODUITS**
VERFAHREN ZUR VERFOLGBARKEIT UND AUTHENTIFIZIERUNG VON PRODUKTEN
METHOD FOR THE TRACEABILITY AND AUTHENTICATION OF PRODUCTS

(30) Priorité: 24.09.2018 FR 1858661
(43) Date de publication de la demande: 04.08.2021
(73) Titulaire: Novatec SA, 82000 Montauban (FR)
(72) Inventeur: BOURRIERES, Francis, 82000 MONTAUBAN (FR); BOURRIERES, Franck, 82000 MONTAUBAN (FR)
(74) Mandataire: Ipside
(86) Numéro de dépôt international: PCT/EP2019/074738
(87) Numéro de publication internationale: WO 2020/064407

(56) Documents cités:
- FR-A1- 2 996 660
- US-A1- 2009 283 583
- US-A1- 2017 286 974

## Description

### DOMAINE DE L'INVENTION

La présente invention se rapporte au domaine des systèmes de marquage pour la traçabilité et l'authentification de produits.

Plus particulièrement l'invention concerne un procédé de traçabilité et d'authentification d'un produit.

### ARRIÈRE-PLAN TECHNOLOGIQUE

De nombreuses solutions techniques sont disponibles pour identifier et authentifier un produit original et le différencier d'un autre produit original du même type ou d'une contrefaçon. Beaucoup de ces solutions consistent dans le marquage individuel de produits avec des éléments de sécurité difficilement reproductibles pour un contrefacteur.

Par exemple, certains documents officiels comme les cartes d'identité, les passeports et les billets de banque, intègrent des éléments holographiques, magnétiques, infrarouges, et UV dans un support papier avec des caractéristiques bien définies. La présence des éléments de sécurité multiples rend très difficile la reproduction à l'identique de ces objets, du fait que la production de l'objet et son marquage sont complexes en eux-mêmes et requièrent des outils technologiques bien spécifiques. Toutefois si dans ces solutions le caractère défini du support en facilite la fabrication et la lecture à grande échelle, la complexité n'est plus vraiment un obstacle pour les contrefacteurs qui n'hésitent pas à se doter de moyens techniques modernes et performants.

D'autres solutions de marquage des produits sont moins contraignantes car elles ne sollicitent pas une conception particulière du produit et le marquage est réalisé sur l'emballage du produit. Par exemple, la demande internationale de brevet No. WO 03/038767 A1 propose un procédé de traçabilité et d'authentification des produits de luxe comme des bouteilles de vin. Ce document propose d'assigner à une bouteille de vin, un bouchon et une capsule comportant une association de deux codes générés aléatoirement, ou encore deux combinaisons de deux codes, lesdites combinaisons de codes étant appariées dans un registre de produits authentiques que le consommateur peut consulter à distance. Cette solution requiert le marquage individuel de chaque bouchon et de chaque capsule lors des opérations d'embouteillage, ainsi que le suivi et l'enregistrement de la combinaison des codes d'identification attribués à chaque produit. La mise en place de cette solution demande donc la modification des procédés d'embouteillage et/ou d'emballage, ainsi que la réalisation simultanée d'une base des données de produits authentiques assez complexe et consommatrice d'infrastructure ce qui se justifie lorsque le produit marqué présente une valeur suffisante.

La demande de brevet US2009/0283583-A1 divulgue un système d'authentification d'articles sur lequel un identifiant est imprimé sur un article et une signature dudit article est enregistrée dans une base de données.

Il est donc aujourd'hui intéressante de disposer d'une solution de traçabilité et d'authentification qui puisse satisfaire économiquement une application à des produits de valeurs modérées, dont le prix de vente ne permet pas l'utilisation de procédés de mise en œuvre complexe qui auraient pour conséquence une augmentation perceptible du prix du produit.

Par exemple, les maisons d'édition de livres sont particulièrement touchées par cette problématique. Les maisons d'édition des livres sélectionnent des œuvres pour lesquelles elles acceptent le risque de financier les étapes nécessaires avant la mise en vente d'un livre, par exemple elles se chargent de la révision et de la correction du texte, de la mise en page, de l'impression, de la promotion, de la diffusion, ainsi que de la distribution des livres directement ou par un réseau de revendeurs.

Or, les maisons d'édition des livres relèvent actuellement un défi important pour surmonter les pertes économiques que génère chaque année la vente de livres contrefaits qui se retrouvent facilement sur le marché à un prix moindre. Le problème s'accentue du fait qu'il est actuellement très difficile de distinguer un livre original d'un livre piraé ou contrefait, et par la présence de ces livres contrefaits dans des réseaux commerciaux populaires, notamment sur des sites internet de vente en ligne.

En effet, les technologies de numérisation et d'impression permettent aujourd'hui de cloner à bas prix un livre dans un temps réduit, sans effort de conception et avec une qualité proche de celle de l'impression utilisée par la maison d'édition. Les maisons d'édition des livres, et à plus forte raison les acheteurs, éprouvent donc des difficultés à identifier un livre issu d'une édition originale.

En pratique cette situation concerne tous les fabricants de produits qui ont un prix modeste de vente ne permettant pas d'utiliser de méthodes de protection coûteuses, et que des méthodes de reproduction permettent de réaliser leurs produits sans investissement de conception à des coûts de fabrication inférieurs.

Il existe donc un besoin d'une méthode de traçabilité et d'authentification des produits efficace et permettant son application à bas coût.

### EXPOSÉ DE L'INVENTION

À cette fin, l'invention propose un procédé de traçabilité et d'authentification de produits, dans lequel un produit est marqué avec un élément authentifiant et un élément de suivi. Ledit procédé comportant en outre les étapes suivantes :
- une étape d'approvisionnement d'un ensemble d'éléments authentifiant, une représentation numérique de chaque élément authentifiant étant enregistré dans une base de données **BD-EA** « Base de Données d' Eléments Authentifiant » ;
- une étape de génération d'un ensemble d'éléments de suivi, lesdits éléments de suivi étant enregistrés dans une base des données **BD-ESP** « Base des Données d'Eléments de Suivi Produits», ladite base de données **BD-ESP** étant indépendante de la base des données **BD-EA** ;
- une étape de marquage de produits, dans laquelle ledit produit est associé physiquement à une combinaison formée par un élément de suivi unique, dudit ensemble d'éléments de suivi, et par un élément authentifiant unique dudit ensemble des éléments authentifiant, ladite combinaison de l'élément de suivi et de l'élément authentifiant n'étant pas enregistrée lors de ladite étape de marquage dans les bases de données respectives ni dans une autre base de données.

Le procédé proposé par l'invention est très avantageux du fait de l'utilisation de deux bases de données crées de manière indépendante et dont les besoins en infrastructure et de gestion son minimales. De plus la création des bases de données peut être complètement déliée de l'étape de marquage de produits.

Dans un autre mode de réalisation, l'étape de génération d'un ensemble d'éléments de suivi est réalisée conjointement avec l'étape de marquage de produits, l'élément de suivi pour marquer ledit produit étant généré et sauvegardé dans la base des données **BD-ESP** lors du marquage dudit produit.

Dans un mode de réalisation de l'invention, l'élément de suivi comporte un code unique comportant une chaîne alphanumérique produite par un algorithme de génération aléatoire ou pseudo aléatoire de chaîne alphanumérique. D'autre part, l'élément authentifiant comporte un visuel issu d'un processus chaotique d'intégrations d'éléments physiques dans un substrat.

Le procédé de l'invention permet le suivi et l'authentification d'un produit au moyen d'une étape une étape de vérification d'authenticité d'un produit marqué dans laquelle :
- un élément authentifiant et un élément de suivi dudit produit sont acquis et envoyés, au moyen d'un terminal, à une unité de contrôle distante, et
- l'unité de contrôle effectue une recherche dudit élément authentifiant dans la base des données **BD-EA,** et une recherche dudit élément de suivi dans la base des données **BD-ESP.**

La vérification d'authenticité est positive lorsque l'unité de contrôle constate d'une part l'existence de l'élément authentifiant dans la base de données **BD-EA** et de l'élément de suivi dans la base de données **BD-ESP,** et d'autre part que ledit élément authentifiant est déclaré disponible dans la base de données **BD-EA** et que ledit élément de suivi est déclaré disponible dans la base de données **BD-ESP.**

Le procédé de l'invention peut comporter également une étape de mise à jour des bases de données **BD-EA et BD-ESP** dans laquelle suite à une première vérification positive de l'authenticité d'un produit marqué, l'unité de contrôle déclare indisponibles l'élément authentifiant et l'élément de suivi dudit produit pour une vérification positive ultérieure de l'authenticité d'un autre produit.

Selon un mode de réalisation de l'invention, le procédé comporte une étape de création d'un registre des combinaisons des éléments authentifiant avec des éléments de suivi, dans laquelle l'élément authentifiant et l'élément de suivi du produit marqué sont couplés dans ledit registre des combinaisons lors d'une première utilisation desdits éléments dans la vérification d'authenticité dudit produit et lorsque la vérification conclue à l'authenticité.

Selon un mode de réalisation de l'invention, le marquage de produits est réalisé au moyen d'au moins un support de marquage comportant l'élément de suivi et/ou l'élément authentifiant assigné à chaque produit, ledit support ne formant pas partie du produit. Ledit support pouvant être apposé sur un élément séparé du produit mais l'accompagnant tel que son emballage, sa notice, ou bon de garantie.

Selon un mode de réalisation de l'invention, l'élément de suivi n'est lisible que lorsque :
- le produit est déballé ou prêt à être utilisé, ou
- lorsqu'une couche de recouvrement externe dudit élément de suivi est altérée visuellement de façon non réversible.

De la même manière, en outre l'élément authentifiant n'est visible que lorsque :
- le produit est déballé ou prêt à être utilisé, ou
- lorsqu'une couche de recouvrement externe dudit élément authentifiant est altérée visuellement de façon non réversible.

### PRÉSENTATION DE FIGURES

D'autres avantages, buts et caractéristiques particulières de la présente invention ressortiront de la description qui va suivre faite, dans un but explicatif et nullement limitatif, en regard des dessins annexés.
Figure 1. Un schéma synoptique d'un exemple de mise en œuvre du marquage des produits et construction des bases de données selon le procédé de l'invention.
Figure 2. Une vue agrandie d'un exemple d'élément authentifiant sous forme d'élément authentifiant de code à bulles.
Figure 3. Un exemple d'élément de suivi sous forme d'un code d'identification.
Figure 4. Un schéma synoptique d'un exemple d'une vérification d'authenticité selon le procédé de l'invention.

### DESCRIPTION DÉTAILLÉE DE MODES DE RÉALISATION DE L'INVENTION

L'invention propose un procédé de traçabilité et d'authentification d'un produit, dans lequel le produit est marqué avec au moins deux éléments différents : un élément de suivi et un élément authentifiant. Dans la pratique, le procédé de l'invention est utilisé pour garder la traçabilité des produits d'un groupe de produits d'origine connue, ainsi que pour pouvoir identifier et authentifier ces produits une fois qu'ils sont mis en service.

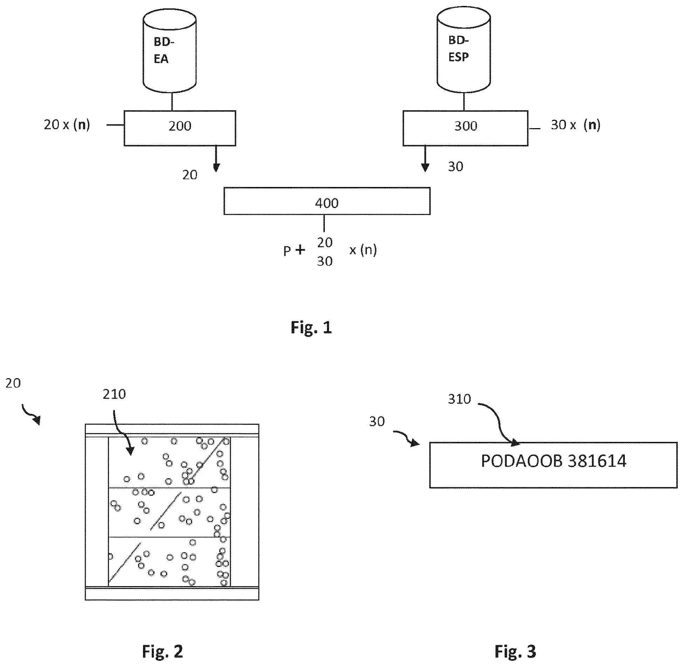

La fig. 1 illustre schématiquement un mode de réalisation du procédé de traçabilité et d'authentification de l'invention. Le procédé comporte les étapes suivantes, prises dans tout ordre techniquement opérable :
- une étape d'approvisionnement 200 d'un ensemble d'éléments authentifiant 20, une représentation numérique de chaque élément authentifiant 20 étant sauvegardé dans une base de données **BD-EA** « Base de Données des Eléments Authentifiant » ;
- une étape de génération 300 d'un ensemble d'éléments de suivi 30, lesdits éléments de suivi 30 étant sauvegardés dans une base des données **BD-ESP** « Base des Données d'Eléments de Suivi Produits», ladite base des données **BD-ESP** étant indépendante de la base des données **BD-EA** ;
- une étape de marquage de produits 400, dans laquelle ledit produit est associé physiquement avec une combinaison formée par un élément authentifiant 20 unique dudit ensemble des éléments authentifiant, avec un élément de suivi 30 unique dudit ensemble d'éléments de suivi, et dans laquelle ladite combinaison n'est pas enregistrée.

L'invention propose ainsi un procédé dans lequel sont simplifiées les opérations nécessaires pour la création des bases de données **BD-EA et BD-ESP** permettant le suivi et l'authentification de produits. En effet, la création de chaque base de données se fait de manière indépendante et peut être complètement déliée du marquage des produits, ce qui permet en plus de minimiser les besoins d'infrastructure pour leur création et maintien.

D'autre part un producteur souhaitant implémenter le procédé de l'invention peut garder une confidentialité totale sur l'usage qu'il attribue à un ensemble d'éléments authentifiant. Par exemple lorsqu'un producteur souhaite implémenter le procédé de l'invention, il s'approvisionnera dans un premier temps, d'un ensemble d'éléments authentifiant présentant aucune relation prédéfinie avec les produits pour lesquels ils seront utilisés, mais pour lesquels existe un registre préalable dans une base de données d'éléments authentifiant **BD-EA.**

Lorsque le producteur désigne ledit ensemble d'éléments authentifiant pour le marquage d'un groupe de produits, il génère de manière indépendante un ensemble d'éléments de suivi sauvegardés dans une base des données de suivi produits **BD-ESP.** Les informations permettant d'identifier ledit groupe de produits peuvent ainsi être comprises dans la base des données de suivi produits, ou au moins liées à la dite base de données. La base de données **BD-ESP** peut être gérée, si besoin, uniquement par le producteur.

Le procédé de l'invention se distingue également par la facilité de mise en œuvre de l'étape de marquage de produits. En effet, chaque produit est associé aléatoirement avec un élément authentifiant 20 et un élément de suivi 30 sans faire un suivi et/ou registre de la combinaison de l'élément de suivi avec l'élément authentifiant assigné à chacun des produits. Il est ainsi possible de minimiser les opérations nécessaires lors du marquage des produits, sans avoir besoin d'équipement de relecture de l'un ou l'autre des éléments ainsi que de conserver des besoins minimaux en infrastructure pour les bases des données **BD-EA et BD-ESP,** car ces bases ne sont pas configurées pour faire un registre initial des combinaisons d'élément de suivi et d'élément authentifiant pour chaque produit.

Le procédé d'authentification de l'invention conserve cependant un haut degré de sécurité du fait de l'utilisation d'un élément authentifiant 20 unique (Figure 2) et d'un élément de suivi 30 comportant un code unique pour chaque produit marqué (Figure 3).

L'élément authentifiant 20 peut correspondre à un élément visuel 210 de reproduction complexe ou non reproductible, permettant d'authentifier un produit avec haut degré de sécurité.

Dans un mode de réalisation préféré de l'invention, l'élément authentifiant est non reproductible et comporte un visuel 210 et/ou un motif issu d'un processus chaotique de génération et d'intégration d'éléments physiques sur un support. On entend ici par non reproductible que la reproduction à l'identique est impossible en pratique, ou au moins très complexe et coûteuse pour que sa reproduction ne soit pas techniquement ou économiquement envisageable par un contrefacteur.

Par exemple un élément authentifiant peut être produit par la dispersion aléatoire sur un support des paillettes ou filaments de couleurs, de textures et de formes différentes non déterminées. L'élément authentifiant 30 peut être également produit par la dispersion chaotique de bulles dans un polymère (Fig. 2). Un motif ainsi formé possède des caractéristiques visuelles uniques, ainsi que des relations de proportion et de distribution spécifiques entre les différents éléments graphiques. Les étiquettes ou éléments authentifiant commercialisés par *Prooftag* (marque enregistrée) sont des exemples d'éléments authentifiant selon l'invention.

La « Base de Données d'Eléments Authentifiant » **BD-EA** comporte une représentation numérique de chacun des éléments authentifiant 20 affectés à un producteur, lequel producteur décidera d'affecter tout ou partie desdits éléments authentifiant à un groupe des produits dont il souhaite que l'authenticité puisse être vérifiée par un détenteur ultérieur d'un produit dudit groupe de produits. La représentation d'un élément authentifiant 20 dans la base de données **BD-EA** peut comporter une ou des images dudit élément authentifiant et/ou d'une ou plusieurs clés obtenues par la lecture de l'élément authentifiant par un algorithme défini.

La vérification de l'élément authentifiant dans la base des données se fait donc au moyen d'un outil de lecture adapté à l'acquisition d'au moins une image, le cas échéant d'un traitement local de l'image par une application implémentée dans l'outil de lecture permettant de déterminer la ou les clés de l'élément authentifiant, et la transmission de l'au moins une image, le cas échéant et/ou de la ou des clés déterminées localement, à un serveur de la Base de données **BD-EA** via un réseau de communication.

L'élément de suivi 30 comporte un code unique 310 attribué à chaque produit à marquer (Fig. 3). Ce code unique est de préférence lisible pour être reproduit. Il consiste par exemple en une suite de caractères alphanumériques ou de symboles cryptographiques.

Les codes uniques 310 des éléments de suivi 30 sont générés aléatoirement ou pseudo-aléatoirement par la mise en œuvre d'un algorithme de sorte que chaque code d'identification ait une probabilité de génération infinitésimale, en pratique marginal vis-à-vis des exigences du procédé. La composition possible des codes, c'est-à-dire la longueur et les caractères et/ou symboles avec lesquels seront générés les codes, permettra donc la formation d'un nombre de codes différents très supérieur au nombre des produits à marquer de sorte qu'un code généré frauduleusement n'aura qu'une probabilité faible de reproduire un code généré licitement.

Par exemple, si l'on souhaite marquer 1000 produits, le choix d'une composition de code parmi dix millions de combinaison possibles donne pour chaque code qui serait généré frauduleusement une probabilité de seulement un sur dix milles que ledit code frauduleux corresponde à un des mille codes licites. Ainsi une personne malintentionnée ne peut pas par une logique quelconque trouver des éléments de suivi enregistrés préalablement et ses «chances » de trouver un tel élément s'avèrent faibles, l'exemple numérique précédent n'étant pas limitatif.

Dans un mode de réalisation, les codes uniques 310 partagent une partie de leur composition de manière à permettre l'identification du groupe des produits auquel a été assigné ledit code. Par exemple, pour une édition des livres les codes uniques 310 assignés à un groupe de produits comportent une partie générée aléatoirement et unique pour chaque code, et une partie comportant le numéro dit ISBN du livre (numéro identifiant normalisé des publications dans le domaine de l'édition). Dans un autre mode de réalisation, l'élément de suivi 30 comporte un code-barres ou un code matriciel à lecture optique comportant les informations sur l'identité du produit et/ou d'accès à une unité de contrôle.

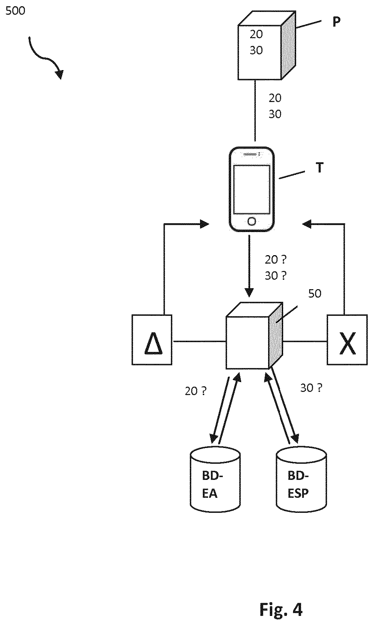

La figure 4 illustre schématiquement le processus d'une vérification d'authenticité 500 et du suivi d'un produit marqué P selon l'invention. Dans cette étape du procédé de l'invention, une personne détentrice d'un produit marqué P interroge une unité de contrôle 50 pour vérifier l'existence de l'élément authentifiant 20 et de l'élément de suivi 30 dans les bases des données **BD-EA et BD-ESP** respectivement. L'unité de contrôle est par exemple un serveur distant ayant accès aux bases de données **BD-EA et BD-ESP.**

Dans une forme de réalisation dans laquelle les deux bases de données sont totalement indépendantes, chacune est interrogée séparément par les serveurs permettant d'y accéder. Dans cette configuration, la double interrogation est transparente pour un utilisateur de l'outil de lecture mis en œuvre.

L'étape vérification d'authenticité se réalise au moyen d'un terminal T permettant une acquisition et un envoi de l'élément authentifiant 20, image(s) ou clé(s), et de l'élément de suivi 30 du produit marqué à l'unité de contrôle 50. Le terminal T correspond par exemple à un téléphone portable, une tablette, un ordinateur, ou un autre terminal spécifique comportant un lecteur optique et relié à un réseau de communication. De préférence, l'élément de suivi comporte également un code matriciel (QR code) comportant une adresse internet à laquelle doit se connecter le terminal pour interroger l'unité de contrôle 50.

Lors de cette étape de vérification, l'unité de contrôle est interrogée pour déterminer indépendamment si chacun de l'élément de suivi 30 et de l'élément authentifiant 20 est identifié et disponible dans les bases de données respectives **BD-EA et BD-ESP.** Dans un mode de mise en œuvre de l'invention, il est d'abord saisi ou acquis le code unique 310 de l'élément de suivi 30 avec le terminal T, puis ledit code est transmis à l'unité de contrôle 50 configurée pour effectuer une recherche dans la base des données **BD-ESP** pour vérifier si l'élément de suivi est identifié et disponible. L'unité de contrôle requiert la transmission des données de l'élément authentifiant, image(s) et/ou clé(s), pour continuer la vérification et recherche dans la base de données **BD-EA** si l'élément authentifiant est identifié et disponible. Bien entendu l'ordre d'envoi des éléments à l'unité de contrôle et de leur recherche dans les bases des données **BD-EA et BD-ESP** peut être inversé ou réalisé en parallèle.

L'unité de contrôle 50 est configurée pour authentifier un produit suite à une vérification positive Δ d'une présence et d'une disponibilité de l'élément authentifiant 20 dans la base de données **BD-EA** et de l'élément de suivi 30 dans la base de données **BD-ESP.** Au contraire, le résultat de la vérification est négatif X lorsque la présence et/ou la disponibilité d'au moins un desdits éléments n'est pas confirmée. Dans les deux cas, l'unité de contrôle informe le terminal T du résultat de la vérification d'authenticité.

Il est ainsi détecté que le produit porte ou non un élément de suivi et un élément authentifiant licite déterminant son statut d'authenticité.

Si l'un ou l'autre, ou les deux éléments de suivi et authentifiant n'est pas disponible, il est détecté une tentative de réutilisation desdits élément de suivi et élément authentifiant, laquelle est associée à une tentative frauduleuse, par exemple pour un produit non authentique.

Par présence d'un élément on entend que ledit élément est connu dans une base de données car une valeur ou une caractéristique dudit élément a été sauvegardée dans ladite base de données. Par disponible on entend qu'un élément authentifiant 20 ou de suivi 30 est présent dans une base de données, et que ledit élément n'a pas été utilisé lors d'une étape de vérification d'authenticité précédente dans laquelle vérification d'authenticité a été reconnue.

Pour cela, lors de la première vérification positive d'un produit marqué P, il est enregistré dans les bases de données **BD-EA et BD-ESP** que l'élément authentifiant 20 et l'élément de suivi 30 utilisés pour l'authentification d'un produit sont indisponibles, chacun dans leurs bases de données respectives pour une vérification positive ultérieure. Ce mode de réalisation permet de prévenir la copie des éléments marqués sur un produit original, ou leur prélèvement, pour les utiliser sans autorisation et marquer un produit contrefait.

Dans un mode de mise en œuvre, il est possible d'augmenter la vitesse de recherche dans la base des données lorsque l'unité de contrôle est configurée pour vérifier uniquement les éléments de suivi et les éléments authentifiant déclarés disponibles. La vitesse améliorée ainsi progressivement car le nombre d'éléments de suivi et d'éléments authentifiant disponibles à vérifier dans les bases des données, se réduit en taille à mesure que les produits du groupe des produits sont identifiés, authentifiés, et leurs éléments authentifiant et de suivi sont déclarés indisponibles.

Dans un mode de mise en œuvre, il est créé un registre de combinaisons des éléments authentifiant avec des éléments de suivi, dans lequel un élément authentifiant disponible de la base de données **BD-EA** est couplé avec un élément de suivi disponible de la base de données **BD-ESP,** et ladite combinaison d'éléments est enregistrée lorsque l'étape de vérification a conclu à l'authenticité du produit. Il est ainsi possible de garder une traçabilité des combinaisons des éléments de suivi avec les éléments authentifiant qui ont été assignés aux produits dont on souhaite conserver une traçabilité, tout en conservant la facilité de mise en œuvre du marquage et la construction des bases de données proposée par l'invention.

Le procédé d'authentification de l'invention est donc avantageux dans le suivi après vente des produits d'un groupe ou lot de produits, car il permet non seulement de réaliser le marquage des produits permettant son authentification, mais aussi de conserver une traçabilité du nombre des produits qui ont été authentifiés et le nombre de produits pas encore authentifiés. Le procédé permet également de détecter facilement les contrefaçons d'un produit par la simple absence de marquage sur le produit ou par l'absence des éléments authentifiant et/ou de suivi d'un produit marqué dans les bases de données **BD-EA et BD-ESP.**

Pour le marquage d'un produit, l'élément authentifiant 20 et l'élément de suivi 30 peuvent être apposées sur le produit, par exemple par impression ou fixation, ou sur une documentation accessoire ou un emballage du produit. De préférence, les deux éléments ne sont accessibles ou lisibles que lorsque le produit est déballé ou prêt à être utilisé. L'élément de suivi peut également comporter une couche de recouvrement externe nécessitant un acte d'altération non réversible pour exposer l'élément de suivi, et alerter ainsi un vérificateur que l'élément de suivi a déjà été divulgué. À titre d'exemple l'élément de suivi peut se trouver sous une encre à gratter, une étiquette pelable ou destructible.

Dans un mode de réalisation de l'invention, un produit est marqué au moyen d'un support de marquage comportant un élément authentifiant et/ou un élément de suivi. Ce mode de réalisation est particulièrement avantageux lorsque le transfert du support de marquage peut être réalisé par un procédé à un bas coût, et ne modifie pas ou n'affecte que peu les procédés existants de fabrication du produit et de son emballage. Le support de marquage peut correspondre à un support papier comportant l'élément authentifiant sous forme d'étiquette et l'impression d'un élément de suivi sous la forme d'un code d'identification. Alternativement l'élément authentifiant et l'élément de suivi peuvent être réalisés dans des supports de marquage différents.

Le support ou les supports de marquage sont ainsi fabriqués séparément et ajoutés au produit postérieurement, par exemple lors de l'étape de conditionnement du produit dans son emballage. Ce mode de réalisation peut être utilisé pour marquer une édition des livres d'origine connue, de manière à insérer dans un livre ledit support de marquage, avant les opérations d'emballage sous film plastique qui sont souvent réalisées pour protéger les livres avant leur vente. De façon avantageuse, dans un mode de réalisation l'élément authentifiant 20 est visible de l'extérieur et l'élément de suivi 30 n'est accessible que lorsque l'emballage a été ouvert/détruit.

Il est ainsi possible de mettre en œuvre un procédé de traçabilité et authentification des produits dans lequel le marquage des produits et la construction de la base des données sont simplifiés et ne requièrent pas la modification substantielle des procédés de production du produit ou de son emballage. De plus, les caractéristiques de construction et mise à jour de la base des données permettent de faire le suivi et l'authentification d'un groupe de produits comportant un nombre de produits élevé, toute en conservant une facilité de construction et de gestion des bases de données.

Le procédé de traçabilité et d'authentification peut avantageusement être mis en œuvre à un bas coût, et offre un haut degré de sécurité dans l'authentification d'un produit.

Le procédé de traçabilité et d'authentification de l'invention s'applique à toutes sortes de produits, tels que de manière non limitative des produits cosmétiques, d'hygiène, alimentaires, vestimentaires, électroniques, décoratifs, des parfums, des livres, des bijoux et tout autre produit de grande diffusion. Le procédé est particulièrement adapté aux produits comportant un emballage ou un suremballage permettant de limiter l'accessibilité notamment à l'élément de suivi. Par exemple, le produit peut correspondre à un tube de dentifrice dans son étui, une bouteille de parfum ou produit cosmétique dans son coffret, un livre dans son suremballage, un produit alimentaire dans une conserve ou coffret, *etc.*

## Revendications

1. Procédé de traçabilité et d'authentification de produits, dans lequel un produit est marqué avec un élément authentifiant (20) et un élément de suivi (30), ledit procédé étant **caractérisé en ce qu'**il comporte :
- une étape d'approvisionnement (200) d'un ensemble d'éléments authentifiant (20), une représentation numérique de chaque élément authentifiant (20) étant enregistré dans une base de données **BD-EA** « Base de Données d' Eléments Authentifiant » ;
- une étape de génération (300) d'un ensemble d'éléments de suivi (30), lesdits éléments de suivi étant enregistrés dans une base des données **BD-ESP** « Base de Données d'Eléments de Suivi Produits», ladite base des données **BD-ESP** étant indépendante de la base des données **BD-EA** ;
- une étape de marquage de produits (400), dans laquelle ledit produit est associé physiquement à une combinaison formée par un élément de suivi (30) unique, dudit ensemble d'éléments de suivi, et par un élément authentifiant (20) unique dudit ensemble des éléments authentifiant, ladite combinaison de l'élément de suivi et de l'élément authentifiant n'étant pas enregistrée lors de ladite étape de marquage dans les bases de données respectives ni dans une autre base de données.

2. Procédé de traçabilité et d'authentification suivant la revendication 1, dans lequel l'étape de génération (300) d'un ensemble d'éléments de suivi est réalisée conjointement avec l'étape de marquage de produits (400), l'élément de suivi (30) pour marquer ledit produit étant généré et sauvegardé dans la base des données **BD-ESP** lors du marquage dudit produit.

3. Procédé de traçabilité et d'authentification suivant l'une des revendications précédentes, dans lequel l'élément de suivi (30) comporte un code unique (310) comportant une chaîne alphanumérique produite par un algorithme de génération aléatoire ou pseudo aléatoire de chaîne alphanumérique.

4. Procédé de traçabilité et d'authentification suivant l'une des revendications précédentes, dans lequel l'élément authentifiant (20) comporte un visuel (210) issu d'un processus chaotique d'intégrations d'éléments physiques dans un substrat.

5. Procédé de traçabilité et d'authentification suivant l'une des revendications précédentes, comportant une étape de vérification d'authenticité (500) d'un produit marqué (P) dans laquelle :
- un élément authentifiant (20) et un élément de suivi (30) dudit produit sont acquis et envoyés, au moyen d'un terminal (T), à une unité de contrôle (50) distante, et
- l'unité de contrôle (50) effectue une recherche dudit élément authentifiant (20) dans la base des données **BD-EA,** et une recherche dudit élément de suivi (30) dans la base des données **BD-ESP.**

6. Procédé de traçabilité et d'authentification suivant la revendication 5, dans lequel la vérification d'authenticité est positive lorsque l'unité de contrôle (50) constate d'une part l'existence de l'élément authentifiant (20) dans la base de données **BD-EA** et de l'élément de suivi (30) dans la base de données **BD-ESP,** et d'autre part que ledit élément authentifiant est déclaré disponible dans la base de données **BD-EA** et que ledit élément de suivi est déclaré disponible dans la base de données **BD-ESP.**

7. Procédé de traçabilité et d'authentification suivant l'une des revendications 5 ou 6, comportant une étape de mise à jour des bases de données **BD-EA et BD-ESP** dans laquelle suite à une première vérification positive de l'authenticité d'un produit marqué, l'unité de contrôle (50) déclare indisponibles l'élément authentifiant (20) et l'élément de suivi (30) dudit produit pour une vérification positive ultérieure de l'authenticité d'un autre produit.

8. Procédé de traçabilité et d'authentification suivant l'une des revendications précédentes, comportant une étape de création d'un registre des combinaisons des éléments authentifiant avec des éléments de suivi, dans laquelle l'élément authentifiant (20) et l'élément de suivi (30) du produit marqué sont couplés dans ledit registre des combinaisons lors de d'une première utilisation desdits éléments dans la vérification d'authenticité dudit produit et lorsque la vérification conclue à l'authenticité.

9. Procédé de traçabilité et d'authentification suivant l'une des revendications précédentes, dans lequel le marquage de produits est réalisé au moyen d'au moins un support de marquage comportant l'élément de suivi et/ou l'élément authentifiant assigné à chaque produit, ledit support ne formant pas partie du produit.

10. Procédé de traçabilité et d'authentification suivant l'une des revendications précédentes, dans lequel l'élément de suivi (30) n'est lisible que lorsque :
- le produit est déballé ou prêt à être utilisé, et/ou
- lorsqu'une couche de recouvrement externe dudit élément de suivi (30) est altérée visuellement de façon non réversible.

11. Procédé de traçabilité et d'authentification suivant la revendication 10, dans lequel en outre l'élément authentifiant (20) n'est visible que lorsque :
- le produit est déballé ou prêt à être utilisé, et/ou
- lorsqu'une couche de recouvrement externe dudit élément authentifiant (20) est altérée visuellement de façon non réversible.

## Patentansprüche

1. Verfahren zur Rückverfolgbarkeit und Authentifizierung von Produkten, wobei ein Produkt mit einem authentifizierenden Element (20) und einem Rückverfolgungselement (30) gekennzeichnet ist, wobei das Verfahren **dadurch gekennzeichnet ist, dass** es Folgendes umfasst:
- einen Schritt der Bereitstellung (200) eines Satzes von authentifizierenden Elementen (20), wobei eine numerische Darstellung jedes authentifizierenden Elements (20) in einer **BD-EA-**Datenbank "Datenbank authentifizierender Elemente" gespeichert ist;
- einen Schritt der Generierung (300) einer Reihe von Rückverfolgungselementen (30), wobei die Rückverfolgungselemente in einer **BD-ESP**-Datenbank "Datenbank für Produkt-Rückverfolgungselemente" gespeichert sind, wobei die **BD-ESP**-Datenbank unabhängig von der **BD**-**EA**-Datenbank ist;
- einen Schritt der Kennzeichnung von Produkten (400), wobei das Produkt physikalisch mit einer Kombination verbunden ist, die aus einem einzigen Rückverfolgungselement (30) des Satzes von Rückverfolgungselementen und einem einzigen authentifizierenden Element (20) des Satzes von authentifizierenden Elementen besteht, wobei die Kombination des Rückverfolgungselements und des authentifizierenden Elements während des Schritts der Kennzeichnung weder in den jeweiligen Datenbanken noch in einer anderen Datenbank gespeichert ist.

2. Verfahren zur Rückverfolgbarkeit und Authentifizierung nach Anspruch 1, wobei der Schritt der Generierung (300) eines Satzes von Rückverfolgungselementen zusammen mit dem Schritt der Kennzeichnung von Produkten (400) durchgeführt wird, wobei das Rückverfolgungselement (30) zum Kennzeichnen des Produkts bei der Kennzeichnung des Produkts in der **BD-ESP**-Datenbank generiert und gespeichert wird.

3. Verfahren zur Rückverfolgbarkeit und Authentifizierung nach einem der vorhergehenden Ansprüche, wobei das Rückverfolgungselement (30) einen eindeutigen Code (310) umfasst, der eine alphanumerische Zeichenfolge umfasst, die von einem zufälligen oder pseudozufälligen Algorithmus zur Erzeugung einer alphanumerischen Zeichenfolge erzeugt wird.

4. Verfahren zur Rückverfolgbarkeit und Authentifizierung nach einem der vorhergehenden Ansprüche, wobei das authentifizierende Element (20) ein Bild (210) umfasst, das aus einem chaotischen Prozess der Integration physikalischer Elemente in ein Substrat resultiert.

5. Verfahren zur Rückverfolgbarkeit und Authentifizierung nach einem der vorhergehenden Ansprüche, umfassend einen Echtheitsprüfschritt (500) eines gekennzeichneten Produkts (P), wobei:
- ein authentifizierendes Element (20) und ein Rückverfolgungselement (30) des Produkts erfasst und mittels eines Terminals (T) an eine entfernte Steuereinheit (50) gesendet werden, und
- die Steuereinheit (50) eine Suche nach dem authentifizierenden Element (20) in der **BD-EA**-Datenbank und eine Suche nach dem Rückverfolgungselement (30) in der **BD-ESP**-Datenbank durchführt.

6. Verfahren zur Rückverfolgbarkeit und Authentifizierung nach Anspruch 5, wobei die Echtheitsprüfung positiv ist, wenn die Steuereinheit (50) einerseits das Vorhandensein des authentifizierenden Elements (20) in der **BD-EA-**Datenbank und des Rückverfolgungselements (30) in der BD-**ESP**-Datenbank feststellt, und andererseits, dass das authentifizierende Element in der **BD-EA**-Datenbank als verfügbar erklärt wird und dass das Rückverfolgungselement in der **BD-ESP**-Datenbank als verfügbar erklärt wird.

7. Verfahren zur Rückverfolgbarkeit und Authentifizierung nach einem der Ansprüche 5 oder 6, umfassend einen Schritt der Aktualisierung der **BD-EA-** und **BD-ESP**-Datenbanken, wobei die Steuereinheit (50) nach einer ersten positiven Überprüfung der Echtheit eines gekennzeichneten Produkts das authentifizierende Element (20) und das Rückverfolgungselement (30) des Produkts für eine spätere positive Überprüfung der Echtheit eines anderen Produkts für nicht verfügbar erklärt.

8. Verfahren zur Rückverfolgbarkeit und Authentifizierung nach einem der vorhergehenden Ansprüche, umfassend einen Schritt der Erstellung eines Registers der Kombinationen der authentifizierenden Elemente mit Rückverfolgungselementen, wobei das authentifizierende Element (20) und das Rückverfolgungselement (30) des gekennzeichneten Produkts in dem Register der Kombinationen gekoppelt werden, wenn die Elemente zum ersten Mal bei der Echtheitsprüfung des Produkts verwendet werden und die Überprüfung die Echtheit ergibt.

9. Verfahren zur Rückverfolgbarkeit und Authentifizierung nach einem der vorhergehenden Ansprüche, wobei die Kennzeichnung von Produkten mittels mindestens eines Kennzeichnungsträgers durchgeführt wird, der das jedem Produkt zugeordnete Rückverfolgungselement und/oder das authentifizierende Element umfasst, wobei der Träger nicht Teil des Produkts ist.

10. Verfahren zur Rückverfolgbarkeit und Authentifizierung nach einem der vorhergehenden Ansprüche, wobei das Rückverfolgungselement (30) nur lesbar ist, wenn:
- das Produkt ausgepackt oder gebrauchsfertig ist, und/oder
- wenn eine äußere Deckschicht des Rückverfolgungselements (30) visuell irreversibel verändert wird.

11. Verfahren zur Rückverfolgbarkeit und Authentifizierung nach Anspruch 10, wobei ferner das authentifizierende Element (20) nur sichtbar ist, wenn:
- das Produkt ausgepackt oder gebrauchsfertig ist, und/oder
- wenn eine äußere Deckschicht des authentifizierenden Elements (20) visuell irreversibel verändert wird.

## Claims

1. Method for traceability and authentication of products, wherein a product is marked with an authenticating element (20) and a monitoring element (30), said method being **characterised in that** it includes:
- a step (200) of providing a set of authenticating elements (20), a digital representation of each authenticating element (20) being recorded in a **BD-EA** "Database of Authenticating Elements" database;
- a step (300) of generating a set of monitoring elements (30), said monitoring elements being recorded in a **BD-ESP** "Database of Product Monitoring Elements" database, said **BD-ESP** database being independent of the **BD-EA** database;
- a step (400) of marking products, in which said product is physically associated with a combination formed by a unique monitoring element (30), from said set of monitoring elements, and by a unique authenticating element (20) from said set of the authenticating elements, said combination of the monitoring element and of the authenticating element not being recorded during said marking step in the respective databases or in another database.

2. Method for traceability and authentication according to claim 1, wherein the step (300) of generating a set of monitoring elements is carried out conjointly with the step (400) of marking products, the monitoring element (30) for marking said product being generated and saved in the **BD-ESP** database during the marking of said product.

3. Method for traceability and authentication according to one of the previous claims, wherein the monitoring element (30) includes a unique code (310) including an alphanumerical string produced by an algorithm for random or pseudo-random generation of an alphanumerical string.

4. Method for traceability and authentication according to one of the previous claims, wherein the authenticating element (20) includes a visual (210) coming from a chaotic process of integrations of physical elements into a substrate.

5. Method for traceability and authentication according to one of the previous claims, including a step (500) of verifying the authenticity of a marked product (P) in which:
- an authenticating element (20) and a monitoring element (30) of said product are acquired and sent, via a terminal (T), to a remote verification unit (50), and
- the verification unit (50) carries out a search for said authenticating element (20) in the **BD-EA** database, and a search for said monitoring element (30) in the **BD-ESP** database.

6. Method for traceability and authentication according to claim 5, wherein the verification of authenticity is positive when the verification unit (50) notes on the one hand the existence of the authenticating element (20) in the **BD-EA** database and of the monitoring element (30) in the **BD-ESP** database, and on the other hand said authenticating element is declared available in the **BD-EA** database and said monitoring element is declared available in the **BD-ESP** database.

7. Method for traceability and authentication according to one of claims 5 or 6, including a step of updating the **BD-EA** and **BD-ESP** databases in which after a first positive verification of the authenticity of a marked product, the verification unit (50) declares the authenticating element (20) and the monitoring element (30) of said product unavailable for a later positive verification of the authenticity of another product.

8. Method for traceability and authentication according to one of the previous claims, including a step of creating a register of the combinations of the authenticating elements with monitoring elements, in which the authenticating element (20) and the monitoring element (30) of the marked product are coupled in said register of the combinations during a first use of said elements in the verification of the authenticity of said product and when the verification concludes the authenticity.

9. Method for traceability and authentication according to one of the previous claims, wherein the marking of products is carried out via at least one marking support including the monitoring element and/or the authenticating element assigned to each product, said support not forming part of the product.

10. Method for traceability and authentication according to one of the previous claims, wherein the monitoring element (30) is only readable when:
- the product is unpackaged or ready to be used, and/or
- when an outer covering layer of said monitoring element (30) is visually altered in a non-reversible manner.

11. Method for traceability and authentication according to claim 10, wherein the authenticating element (20) is further only visible when:
- the product is unpackaged or ready to be used, and/or
- when an outer covering layer of said authenticating element (20) is visually altered in a non-reversible manner.
